(19) Europäisches Patentamt

European Patent Office

Office européen des brevets

(11) **EP 0 729 822 B1**

(12) **EUROPÄISCHE PATENTSCHRIFT**

(45) Veröffentlichungstag und Bekanntmachung des Hinweises auf die Patenterteilung:
**26.08.1998  Patentblatt 1998/35**

(51) Int. Cl.$^6$: **B29C 47/92**

(21) Anmeldenummer: **96100137.7**

(22) Anmeldetag: **08.01.1996**

(54) **Steuerungsverfahren für Extrudiermaschinen**

Controlling process for extruders

Méthode de contrôle de machines à extruder

(84) Benannte Vertragsstaaten:
**BE CH DE FR GB IT LI NL**

(30) Priorität: **03.02.1995 DE 19503508**

(43) Veröffentlichungstag der Anmeldung:
**04.09.1996  Patentblatt 1996/36**

(73) Patentinhaber:
**Krupp Werner & Pfleiderer GmbH**
**70469 Stuttgart (DE)**

(72) Erfinder:
• **Herrmann, Reinhard, Dipl.-Ing.**
**D-71254 Ditzingen (Hirschlanden) (DE)**
• **Sämann, Hans-Joachim, Dipl.-Ing.**
**D-74321 Bietigheim-Bissingen (DE)**
• **Wiedmann, Werner, Dr.-Ing.**
**D-70499 Stuttgart (DE)**
• **Bachmann, Martin, Dipl.-Ing.**
**D-71229 Leonberg (DE)**
• **Alonso-Garcia, Gerhard, Dipl.-Ing.**
**D-74385 Pleidelsheim (DE)**

(74) Vertreter:
**Rau, Manfred, Dr. Dipl.-Ing.**
**Rau, Schneck & Hübner**
**Patentanwälte**
**Königstrasse 2**
**90402 Nürnberg (DE)**

(56) Entgegenhaltungen:
**DE-A- 3 833 776          DE-C- 3 348 324**

• **PATENT ABSTRACTS OF JAPAN vol. 10, no. 320 (M-530), 30.Oktober 1986 & JP-A-61 127325 (SEKISUI CHEM CO LTD), 14.Juni 1986,**

**Beschreibung**

Die Erfindung betrifft ein Steuerungsverfahren für Extrudiermaschinen zur automatischen Optimierung von Betriebsparametern auf der Basis einer Fuzzy-Logik-Steuerung, insbesondere zur Maximierung des Materialdurchsatzes oder zur Minimierung der Extruderschnecken-Drehzahl.

Herkömmlicherweise werden Extrudiermaschinen nicht an ihrer Durchsatzgrenze gefahren, d.h. sie werden nicht bei maximal möglichem Drehmoment und Materialdurchsatz betrieben. Der Grund hierfür liegt darin, daß in der Praxis Betriebsschwankungen aufgrund der verarbeiteten Rohstoffe, deren Zudosierung und deren Plastifizierung auftreten, die den Extruder zumindest zeitweise in den Überlastbereich treiben. Dies führt zu einer automatischen Abschaltung des Extruders aufgrund der ihn überwachenden Kontrollorgane, bei denen es sich beispielsweise um Drehmoment-Sensoren für die Überwachung des maximal zulässigen Drehmomentes der Extruderschnecken oder um Drucksensoren zur Überwachung des Extruder-Kopfdruckes handeln kann.

Eine Extruder-Abschaltung kann auch durch Fehleinstellungen seitens des Bedienungspersonals auftreten, wenn z.B. die Drehzahl der Schnecken plötzlich abgesenkt wird.

Um der vorstehend erörterten Problematik zu begegnen, werden Extruder - wie erörtert - aus Sicherheitsgründen in einem Bereich kleinerer DurchSätze gefahren, was grundsätzlich unwirtschaftlich ist. Bei Annäherung an eine vorgegebene Drehmoment- oder Druckgrenze erfolgt nun bei den herkömmlich betriebenen Extrudern eine Warnung beispielsweise in Form eines akustischen oder optischen Signals. Diese Warnung kommt oftmals zu spät und ändert nichts an dem Trend, der im Extruder herrscht, so daß eine spätere Abschaltung oft nicht vermeidbar ist.

Ein Ansatzpunkt zur Lösung der vorstehend erörterten Problematik ist der DE 33 48 324 C2 entnehmbar, aus der ein Verfahren zur Erzielung eines maximal zulässigen Ausstosses eines dosiert beschickten Doppelschnecken-Extruders ohne Überschreiten der maximal zulässigen Verarbeitungstemperatur des jeweiligen Materials angegeben ist. Hierbei wird mit einem Sicherheitsdrehmoment und einer Sicherheitstemperatur gearbeitet, die beide unter dem maximal zulässigen Drehmoment der Schnecken bzw. unter der maximal zulässigen Materialverarbeitungstemperatur liegen. Ausgehend von einem das Sicherheitsdrehmoment und die Sicherheitstemperatur unterschreitenden Betriebspunkt wird nun wechselweise die Schneckendrehzahl und die Materialzudosierung gesteigert. Dabei wird schrittweise ein optimaler Betriebspunkt angefahren, in dem sowohl das Sicherheitsdrehmoment als auch die Sicherheitstemperatur erreicht sind, wobei durch die wechselweise Steigerung der Schnecken-Drehzahl und der Materialzudosierung abwechselnd bis an das Sicherheitsdrehmoment und die Sicherheitstemperatur gefahren wird und jeweils bei Erreichen des Sicherheitsdrehmomentes die Schnecken-Drehzahl und bei Erreichen der Sicherheitstemperatur die Materialzudosierung gesteigert werden. Der als optimal bezeichnete Betriebspunkt wird also durch eine Art "Ping-Pong-Regelung" von Schneckendrehzahl und Materialzudosierung innerhalb eines zulässigen Korridors im Regeldiagramm erreicht. Da hierbei die Regelung über große Bereiche variiert werden, besteht die Gefahr, daß es zu Instabilitäten kommt und insofern ein ordnungsgemäßes Hochfahren des Extruders nicht möglich ist.

Mit Hilfe der aus der DE 33 48 324 C2 bekannten Steuerung wird zwar ein stabiler Betriebspunkt erreicht, jedoch ist dieser hinsichtlich einer Durchsatzmaximierung aufgrund der verwendeten Sicherheitsabstände in den Betriebsparametern nach wie vor nicht optimal. Darüber hinaus ist auch bei Erreichen des dort als optimal bezeichneten Betriebspunktes keine Reaktion auf spätere Störungen im Extruderbetrieb möglich.

Ausgehend von der geschilderten Problematik beim Stand der Technik liegt der Erfindung nun die Aufgabe zugrunde, eine automatische Optimierung von Betriebsparametern der Extrudiermaschine zu erreichen. Insbesondere soll der Materialdurchsatz maximiert oder - falls dies aus produkttechnischen Gründen gewünscht wird - die Extruderwellen-Drehzahl minimiert werden können. Letzteres ist für die Verarbeitung von temperatur- und schersensitiven Produkten im Extruder interessant.

Die Lösung dieser Aufgabe ist durch die im Anspruch 1 angegebenen Merkmale gegeben und beruht in erster Linie auf der Basis einer Fuzzy-Logik-Steuerung. Grundsätzlich ist dabei vorgesehen, daß mindestens eine für den Extruderbetrieb kritische Meßgröße, also beispielsweise das Drehmoment der Extruderschnecke als Ist-Wert erfaßt wird. Dieser Ist-Wert wird mit einem vorgegebenen Soll-Wert, also beispielsweise dem maximal zulässigen Drehmoment-Wert, verglichen und anhand einer Klassifizierungsvorschrift grob klassifiziert. Als Klassifizierung eignen sich beispielsweise die Kriterien "niedrig", "mittel", "hoch", "sehr hoch" und "zu hoch", die beispielweise durch verschiedene Prozentanteile vom Soll-Wert definiert sind

Auf der Basis der vorstehenden Grob-Klassifizierung wird nun ein anhand von Erfahrungswerten definierter Korrektur-Grobwert für den zu steuernden Betriebsparameter ermittelt. So wird beispielsweise bei einer gewünschten Optimierung des Materialdurchsatzes bei einer Feststellung, daß der Drehmomentwert zu hoch ist, als Korrektur-Grobwert "Starke Erniedrigung des Materialdurchsatzes" festgelegt. Wird der Drehmomentwert als "Sehr hoch" einklassifiziert, so wird der Korrektur-Grobwert auf "Verringerung des Materialdurchsatzes" festgelegt usw.

Aus dem vorstehend ermittelten Korrektur-Grobwert wird ein Stellsignal zur maschinenseitigen Änderung des jeweiligen Betriebsparameters generiert. Beispielsweise wird also bei einer verlangten starken Reduzierung des Mengendurchsatzes die Dosierungsvorrichtung des Extruders so verstellt, daß eine um einen festgelegten Betrag geringere Zudosierung an Material in den Extruder erfolgt.

Schließlich wird der vorstehend erläuterte Steuerungsmechanismus zyklisch wiederholt.

Es ist zu betonen, daß das erfindungsgemäße Steuerungsverfahren auf der Basis einer Fuzzy-Logik-Steuerung durch ein entsprechend implementiertes Steuerprogramm realisiert wird, das auf einem Mikroprozessor im Steuergerät des Extruders oder auf einen zugeordneten Personalcomputer ablaufen kann.

Nach Anspruch 2 können zur Optimierung eines Betriebsparameters, wie beispielsweise des Materialdurchsatzes durch den Extruder, parallel mehrere Meßgrößen als Ist-Werte erfaßt und analog dem im Anspruch 1 beschriebenen Verfahren verarbeitet werden. Dabei ist zu ergänzen, daß aus der beschriebenen Grobklassifizierung der Ist-Werte sich verschiedene Änderungsgruppenwerte für den zu optimierenden Betriebsparameter ermittelt werden können. So kann beispielsweise die Erfassung des Extruderwellen-Drehmomentes einerseits dazu führen, daß der Materialdurchsatz als relevanter Betriebsparameter gleich bleiben kann, wogegen bei einer gleichzeitigen Erfassung des Kopfdruckes des Extruders dieser als zu hoch einklassifiziert wird und daher eine starke Reduzierung des Materialdurchsatzes verlangt wird. Insofern wird aus den beiden vorgenannten Korrektur-Grobwerten der kritischere Wert, nämlich "Starke Reduktion des Materialdurchsatzes" ermittelt und daraus ein entsprechendes Stellsignal generiert, das zu einer starken Reduktion der Materialzudosierung am Extruder führt. Insofern befindet sich die nach dem erfindungsgemäßen Steuerungsverfahren arbeitende Steuerung bei einer Erfassung mehrerer Meßgrößen immer auf der sicheren Seite für einen störungsfreien Extruderbetrieb.

Gemäß bevorzugter Ausführungsformen des erfindungsgemäßen Steuerungsverfahrens werden einerseits ein über mehrere aufeinanderfolgende Meßzyklen bestimmter Mittelwert der jeweiligen Meßgröße(n) als Ist-Wert(e) sowie die Standardabweichung des jeweiligen Mittelwertes zur Grobklassifizierung herangezogen. Die Erfassung des Mittelwertes hat einerseits den Vorteil, daß kurzzeitige Instabilitäten nicht zu einer generellen Instabilisierung des Steuerverhaltens führen, da die Mittelwertbildung zu einer Filterung der die jeweiligen Meßgrößen repräsentierenden Signale analog einem Tiefpaßverhalten führt. Andererseits läßt die Einbeziehung der Standardabweichung des jeweiligen Mittelwertes eine Aussage auf die betriebsbedingten Schwankungen der jeweiligen Meßgröße zu, die für ein optimales Steuerverhalten wichtig ist. Dies wird anhand des Ausführungsbeispiels noch verdeutlicht.

Nach Anspruch 5 wird der Gradient des Mittelwertes der mindestens einen erfaßten Meßgröße in die Steuerung einbezogen. Damit ist gewährleistet, daß sich der Extruder nach einer Stellsignaländerung wieder in einem stationären Zustand befindet. Der stationäre Zustand ist nämlich erreicht, wenn sich der Mittelwert der erfaßten Meßgröße innerhalb bestimmter definierter Grenzen nicht mehr ändert. Die vorstehende Maßnahme dient dazu, Stellsignaländerungen im nicht-stationären Zustand, die zu Instabilitäten und Fehlverhalten der Regelung führen würden, zu verhindern.

Als für den Extruderbetrieb kritische Meßgrößen, deren Erfassung und Verarbeitung in der erfindungsgemäßen Weise zu einem optimalen Steuerverhalten führt, haben sich laut Anspruch 6 das Drehmoment der Extruderschnekken, der Kopfdruck des Extruders und die Rückstaulänge des Extrudiermaterials im Schneckenraum herauskristallisiert (Anspruch 6). Nähere Einzelheiten hierzu ergeben sich aus der Beschreibung des Ausführungsbeispiels der Erfindung.

Die im Anspruch 7 angegebenen Maßnahmen dienen der sogenannten Eingabesicherheit bei Handeingriffen durch das Bedienungspersonal. Bei manuellen Eingriffen muß nämlich gewährleistet sein, daß der Extruder durch eine Fehleinstellung nicht festgefahren wird. Anspruch 7 lehrt in diesem Zusammenhang eine Überwachung der möglichen manuellen Eingriffe mit Hilfe des erfindungsgemäßen Steuerverfahrens, wobei die aufgrund des Steuerverfahrens ermittelten zulässigen Änderungen von Stellgrößen mit den manuell eingegebenen Änderungen verglichen und nur solche manuellen Änderungen zugelassen werden, die aufgrund der automatischen Optimierung als unkritisch erkannt worden sind. Dabei kann die Funktion "Eingabesicherheit" auch bei nicht aktivierter Optimierungsfunktion in Aktion sein.

Im einzelnen kann es sich bei den manuell änderbaren Betriebsparametern gemäß Anspruch 8 um die Drehzahl der Extruder-Schnecken, den Materialdurchsatz durch den Extruder und/oder die Gehäusetemperatur in der Plastifizierzone des Extruders handeln.

Laut Anspruch 9 kann das erfindungsgemäße Steuerverfahren noch dahingehend erweitert werden, daß der Materialeintrag in dem Extruder überwacht und bei Erreichen der sogenannten Einzugsgrenze des Extruders - also bei einer Materialanhäufung im Einzugstrichter - ein ermittelter Korrektur-Grobwert für einen Betriebsparameter derart modifiziert wird, daß die Einzugsgrenze des Extruders nicht mehr erreicht wird.

Weitere Merkmale, Einzelheiten und Vorteile des erfindungsgemäßen Steuerungsverfahrens ergeben sich aus der nachfolgenden Beschreibung, in der ein Ausführungsbeispiel anhand der beigefügten Zeichnungen näher erläutert wird. Es zeigen:

Fig. 1          ein schematisches Schaubild eines Extruders mit zugeordneter Fuzzy-Logik-Steuerung,

Fig. 2 und 3   Meßdiagramme zur Darstellung des Optimierungsverhaltens der Logik-Steuerung, und

Fig. 4          ein logisches Blockdiagramm des Aktivierungsblocks.

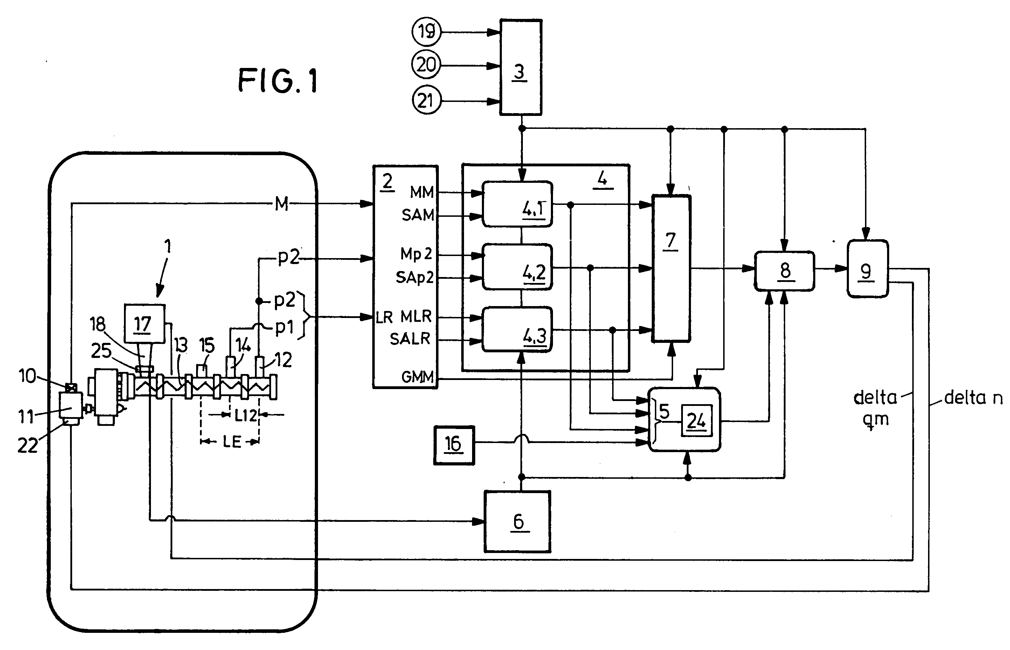

In Fig. 1 ist höchst schematisch ein üblicher Extruder 1 angedeutet, dessen Betrieb mittels einer Fuzzy-Logik-Steuerung FLS gesteuert wird. Diese Steuerung FLS ist dabei als Steuerprogramm auf einem nicht näher dargestellten Mikroprozessor oder Personalcomputer zur Extrudersteuerung implementiert. Im rechten Teil von Fig. 1 ist in diesem Zusammenhang blockbildartig der dem Steuerprogramm zugrundeliegende logische Aufbau und der damit verbundene Weg der Signalverarbeitung in der Fuzzy-Logik-Steuerung FLS dargestellt. Anhand dieser Darstellung kann das erfindungsgemäße Steuerungsverfahren erläutert werden.

Im folgenden wird ein Überblick über die einzelnen logischen Blöcke und die Signalverarbeitung beim Ablauf des Steuerprogrammes durch Benennung der in Fig. 1, rechter Teil, enthaltenen Blöcke gegeben:

- Rechenblock 2
  Hier werden die Mittelwerte und die Standardabweichung der noch näher zu definierenden Meßgrößen berechnet, wie sie für den Extruderbetrieb kritisch sind.

- Aktivierungsblock 3
  Dieser Block stellt einen Eingabebaustein dar, mit der das Bedienungspersonal auswählen kann, ob und welche Optimierung (also beispielsweise Maximierung des Materialdurchsatzes oder Minimierung der Extruderwellen-Drehzahl) aktiviert werden soll.

- Fuzzy-Steuerblock "Optimierungen" 4
  Hier werden die vom Rechenblock 2 ermittelten Mittelwerte und Standardabweichungen als Ist-Werte mit entsprechenden vorgegebenen Soll-Werten verglichen und anhand einer Klassifizierungsvorschrift grob klassifiziert. Auf der Basis dieser Grobklassifizierung wird ein anhand von Erfahrungswerten definierter Korrektur-Grobwert für den jeweils zu optimierenden Betriebsparameter ermittelt und als Ausgangssignal ausgegeben.

- Fuzzy-Steuerblock "Eingabesicherheit" 5
  Hier werden Bedienereingaben für die Änderung eines bestimmten Betriebsparameters mit den Ausgangssignalen aus dem Fuzzy-Steuerblock "Optimierungen" 4 auf ihre Zulässigkeit überprüft.

- Einzugsüberwachung 6
  Hier wird ein vom Extruder 1 herangeführtes Warnsignal, das bei Überschreiten der Einzugsgrenze des Extruders generiert wird, in die Steuerung eingeschleift.

- Komparator 7
  Dieser vergleicht die vom Fuzzy-Steuerblock "Optimierungen" 4 generierten Korrektur-Grobwerte und ermittelt den für die Extrudersicherheit kritischsten Wert.

- Entscheidungslogik 8
  Hier werden die verschiedenen vom Aktivierungsblock 3, vom Fuzzy-Steuerblock "Eingabesicherheit" 5, von der Einzugsüberwachung 6 und vom Komparator 7 herangeführten Signale verknüpft und es wird daraus entschieden, ob und welches Stellsignal zur Änderung eines Betriebsparameters generiert wird.

- Stellsignalgenerierung 9
  Hier wird das eigentliche Stellsignal zur Beeinflussung des zu optimierenden Betriebsparameters generiert und damit der Extruder 1 entsprechend angesteuert.

Folgende, für den Extruderbetrieb kritische Meßgrößen werden nun als Ist-Werte erfaßt:

- Das aktuelle Drehmoment M an der Extruderschnecke
  Ein für dieses Drehmoment M repräsentatives Meßsignal wird durch einen geeigneten Sensor 10 am Antrieb 11 des Extruders erzeugt.

- Der Kopfdruck p2
  Ein den Kopfdruck p2 repräsentierendes Meßsignal wird durch einen geeigneten Sensor 12 im Bereich des austragsseitigen Endes der Extruderschnecke 13 erzeugt.

- Die aktuelle Rückstaulänge LR
  Die Rückstaulänge LR im Extruder wird nicht direkt meßtechnisch erfaßt, sondern im Rechenblock 2 berechnet. Dazu ist stromaufwärts vom Drucksensor 12 ein zweiter Drucksensor 14 angebracht, der den Rückdruck p1 in einem Abstand L12 vom Sensor 12 bestimmt.

Die Rückstaulänge berechnet sich daraus wie folgt:

$$LR = L12 \times p2/(p2 - p1)$$

Durch die Überwachung der Rückstaulänge LR soll verhindert werden, daß diese größer wird als der Abstand LE einer Entgasungsöffnung 15 des Extruders 1 zum austragsseitigen Ende der Extruderschnecke 13. Übertrifft die Rückstaulänge LR nämlich diesen Abstand LE, so verstopft die Entgasungsöffnung 15 und ein Entgasen des Extrusionsmaterials ist nicht mehr gewährleistet.

Da die vorstehend erörterten Meßgrößen stark schwanken können, wird im Rechenblock 2 jeweils der arithmetische Mittelwert daraus gebildet. Dazu werden die aktuellen Ist-Werte der Meßgrößen Drehmoment M, Kopfdruck p2 und Rückstaulänge LR jeweils in Schieberegister geladen und dann über die letzten n Werte die Mittelwerte gebildet. Dadurch erreicht man eine Filterung der entsprechenden Signale, die eine Tiefpaß-Charakteristik zeigt.

Die Anzahl der in die Mittelwertbildung eingehenden Werte kann zwischen 2 und 255 variieren und geht in die Parametrierung der Steuerung ein.

Für den Mittelwert einer Prozeßgröße gilt dabei allgemein die folgende Formel:

$$\overline{S} = \frac{\sum\limits_{n}^{i=1} Si}{n}$$

$\overline{S}$ : Mittelwert einer Prozeßgröße

n : Anzahl Meßwerte für Mittelwertbildung

Si : Aktuelle Prozeßgröße

- Da der Mittelwert keine Aussage auf die Schwankungen einer Meßgröße zuläßt, wird von den obengenannten n Werten im Schieberegister die Standardabweichung nach der folgenden allgemeinen Formel berechnet:

$$\sigma_S = \frac{\sqrt{\sum\limits_{n}^{i=1} S_i{}^2 - \left(\sum\limits_{n}^{i=1} S_i\right)^2}}{n-1}$$

$\sigma_S$ : Standardabweichung der Prozeßgröße

Auf der vorstehenden Berechungsgrundlage werden also im Rechenblock 2 jeweils berechnet und als Ausgangssignale ausgegeben:

- der Mittelwert MM und die Standardabweichung SAM des aktuellen Drehmomentes M,

- der Mittelwert Mp2 und die Standardabweichung SAp2 des Kopfdruckes p2 und

- der Mittelwert MLR und die Standardabweichung SALR der Rückstaulänge.

Ferner wird im Rechenblock 2 der Gradient GMM des Drehmoment-Mittelwertes MM in jedem Zyklus berechnet. Mit Hilfe dieses Gradienten läßt sich nämlich bestimmen, ob sich der Extruder nach einer Änderung eines Betriebsparameters wieder in einem stationären Zustand befindet. Ein solcher stationärer Zustand ist erreicht, wenn sich der Drehmoment-Mittelwert MM innerhalb bestimmter Grenzen - beispielsweise um nicht mehr als 0,1% zwischen zwei aufeinanderfolgenden Zyklen - nicht mehr ändert.

Der Gradient GMM des Drehmoment-Mittelwertes MM wird wie folgt berechnet:

$$GMM = [MM\,(t2) - MM\,(t1)]/(t2 - t1),$$

wobei (t2 - t1) die Zykluszeit ist.

Zusammenfassend sind die verschiedenen Ausgangssignale des Rechenblockes 2 in Fig. 1 eingetragen.

Im weiteren Ablauf des das erfindungsgemäße Steuerungsverfahren realisierenden Steuerprogrammes werden die vorstehend erörterten Ausgangssignale des Rechenblockes 2 dem Fuzzy-Steuerblock "Optimierungen" 4 übergeben.

In diesem Block 4 werden die im Rechenblock 2 aufbereiteten Mittelwerte und Standardabweichungen der als Eingangsgrößen dienenden Meßgrößen des Extruders anhand einer auf Erfahrungswerten beruhenden, einprogrammierten Wissens- und Regelbasis interpretiert. Dies wird anhand der Meßgröße "Drehmoment" bei einer Optimierung des Betriebsparameters "Durchsatz" im folgenden näher erläutert:

- Es werden die beiden Eingangsvariablen Drehmomentmittelwert MM und dessen Standardabweichung SAM nach folgenden Vorschriften auf der Basis des maximal zulässigen Drehmomentes ( = 100%) grob Klassifiziert.

MM < 70%: "niedrig"
MM = 75 - 80%: "mittel"
MM = 85 - 90%: "hoch"
MM > 95%: "sehr hoch"
MM > 100%: "zu hoch"

Für zwischen den angegebenen Prozentbereichen liegende Mittelwerte MM wird eine entsprechende Gewichtung zwischen den einzelnen Grobklassen vorgenommen.

Die Standardabweichung SAM des Drehmoment-Mittelwertes wird wie folgt grob klassifiziert, wobei wiederum eine Gewichtung bei Zwischenwerten vorgenommen wird:

SAM < +/- 1%: "sehr niedrig"
SAM = +/- 2 - 3%: "niedrig"
SAM = +/- 4 - 8%: "mittel"
SAM = +/- 10 - 15%: "hoch"
SAM > +/- 20%: "sehr hoch"

- Die wie vorstehend klassifizierten Eingangsvariablen Drehmoment-Mittelwert MM und dessen Standardabweichung SAM werden über einen matrizenartigen, anhand von Erfahrungswerten definierten Regelsatz verknüpft und daraus ein Korrektur-Grobwert für die Optimierung des Betriebsparameters "Durchsatz" ermittelt.

Der matrizenartige Regelsatz für die Durchsatzänderung bei der Durchsatzoptimierung ist in der folgenden Tabelle 1 dargestellt:

| | | Standardabweichung | | | | |
|---|---|---|---|---|---|---|
| | | sehr niedrig | niedrig | mittel | hoch | sehr hoch |
| Dreh-moment-mittelwert | niedrig | PB | PB | P | P | N |
| | mittel | PB | P | P | Z | N |
| | hoch | P | P | Z | N | NB |
| | sehr hoch | Z | Z | N | NB | NB |
| | zu hoch | N | N | NB | NB | NB |

Tab. 1: Regelsatz für die Durchsatzänderung bei der Durchsatzoptimierung

Die in Tabelle 1 verwendeten Abkürzungen NB, N, Z, P, PB stellen die jeweiligen Korrektur-Grobwerte für den Durchsatz dar und sind in ihrer Bedeutung anhand eines Extruders mit 80 kg/h Maximaldurchsatz wie folgt zu erläutern:

NB (negative big):  Änderung stark negativ (Durchsatz wird um 7 kg/h reduziert
N (negative):  Änderung negativ (Durchsatz wird um 2 kg/h reduziert
Z (zero):  Keine Änderung (Durchsatz bleibt unverändert)

P (positive) :          Änderung positiv (Durchsatz wird um 2 kg/h erhöht

PB (positive big):     Änderung stark positiv (Durchsatz wird um 7 kg/h erhöht

Wird also der Drehmoment-Mittelwert MM als "hoch" und dessen Standardabweichung als "sehr hoch" Klassifiziert, so generiert der diese Eingangsvariablen beurteilende Fuzzy-Klassifizierungsblock 4.1 ein Ausgangssignal "NB", d.h. daß der Durchsatz am Extruder um 7 kg/h reduziert werden muß.

Liegen bei den Eingangsvariablen - wie oben erwähnt - Zwischenwerte vor, so wird auch beim Ausgangssignal eine entsprechende Gewichtung vorgenommen. Wird also die Eingangsvariable "Drehmoment-Mittelwert" als "hoch" klassifiziert und die Standardabweichung liegt zwischen "hoch" und "sehr hoch", so wird ein Ausgangssignal zwischen "N" und "NB" generiert. Der Durchsatz wird folglich um z.B. 5 kg/h reduziert.

- In analoger Weise werden in den Fuzzy-Klassifizierungsblöcken 4.2 und 4.3 die Eingangsvariablen Kopfdruck-Mittelwert Mp2 und dessen Standardabweichungen SAp2 sowie Rückstaulängen-Mittelwert MLR und dessen Standardabweichung SALR grob klassifiziert und über einen entsprechenden Regelsatz jeweils eines der Ausgangssignale "NB", "N", "Z", "P" oder "PB" erzeugt. Für die Grobklassifizierung dieser Eingangsvariablen können wiederum die oben aufgeführten Prozentbereiche verwendet werden, da diese jeweils auf der Basis des geltenden Maximalwertes normiert sind.

Über die drei "Ausgänge" des Fuzzy-Steuerblocks "Optimierungen" 4 werden nun jeweils die Korrektur-Grobwerte dem Komparator 7 zugeführt, der die drei Werte vergleicht und den kritischsten daraus ermittelt. Wird beispielsweise vom Block 4.1 eine Durchsatzänderung "NB" und von den beiden Blöcken 4.2 und 4.3 eine Durchsatzänderung "Z" (Keine Änderung) gemeldet, so selektiert der Komparator 7 den Grobwert "NB" und gibt ihn an seinen Ausgang weiter. Bei der Durchsatzoptimierung wird also immer der Korrektur-Grobwert weitergegeben, der die geringste Erhöhung bzw. stärkste Reduzierung des Durchsatzes bedingt.

- Der vom Komparator 7 selektierte Korrekur-Grobwert wird nun der Entscheidungslogik 8 übergeben, die den selektierten Korrektur-Grobwert mit weiteren Eingabe- und Überwachungskriterien verknüpft. Es handelt sich dabei im einzelnen um den Betriebsmodus, in dem die Fuzzy-Logik-Steuerung FLS betrieben wird, was über den Aktivierungsblock 3 eingegeben wird, um die Sollwert-Eingabe durch Bedienungspersonal, was über die Eingabe-Einheit 16 und den Fuzzy-Steuerblock "Eingabesicherheit" 5 eingegeben wird, und um die Überwachung der Einzugssicherheit, was über die Einzugsüberwachung 6 kontrolliert wird.

Eine wichtige Funktion der Entscheidungslogik 8 ist die Überprüfung, ob der Gradient GMM des Drehmoment-Mittelwertes MM innerhalb vorgegebener Grenzen liegt und damit ein stationärer Betriebszustand des Extruders erreicht ist. Dabei wird in der Entscheidungslogik 8 unterschieden, ob der Komparator 7 eine Durchsatzerhöhung oder eine Durchsatzreduzierung indiziert. Im Falle einer Durchsatzerhöhung wird diese tatsächlich nur dann durchgeführt, wenn der Gradient GMM des Drehmoment-Mittelwertes MM kleiner ist als die vorgegebenen Grenzen und ein Time-out abgelaufen ist. Damit wird sichergestellt, daß eine Durchsatzerhöhung nur im stationären Zustand des Extruders vorgenommen wird. Das Time-out selbst dient dazu, die Tot-Zeit der Zudosierung bei einer Durchsatzänderung und die Tot-Zeit des Extruders selbst bei einer Durchsatzänderung zu überbrücken.

Falls vom Komparator eine Durchsatzreduzierung indiziert wird, wird von der Entscheidungslogik 8 in jedem Falle nach Ablauf des Time-out auf eine Durchsatzreduzierung entschieden und zwar unabhängig vom Gradienten GMM des Drehmoment-Mittelwertes. Der Grund hierfür liegt darin, daß bei einer verlangten Durchsatzreduzierung sich der Extruder in jedem Falle in einem kritischen Zustand befindet, der es nicht erlaubt, daß abgewartet wird, bis ein stationärer Zustand erreicht ist.

Nähere Einzelheiten zum Aktivierungsblock 3, zum Fuzzy-Steuerblock "Eingabesicherheit" 5 und zur Einzugsüberwachung 6 - insbesondere was deren Eingriff in die Steuerung anbelangt - werden weiter unten noch erläutert.

Vorerst soll davon ausgegangen werden, daß die Entscheidungslogik 8 einen Korrektur-Grobwert an die Stellsignalgenerierung 9 ausgibt, die ein entsprechendes Stellsignal delta qm an die Dosiereinheit 17 am Einzugtrichter 18 des Extruders 1 abgibt.

- Der vorstehend erörterte Steuerungsablauf wird zyklisch wiederholt, so daß der Extruder 1 mit maximalem Durchsatz gefahren werden kann.

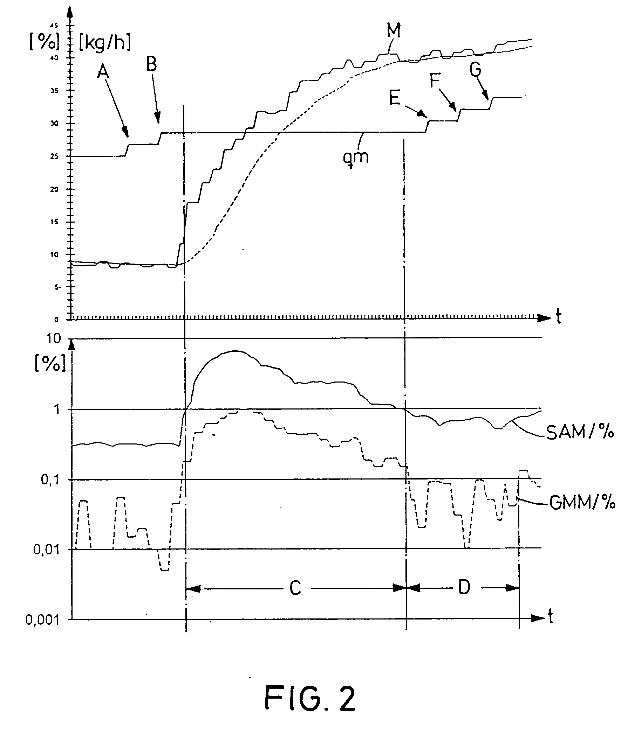

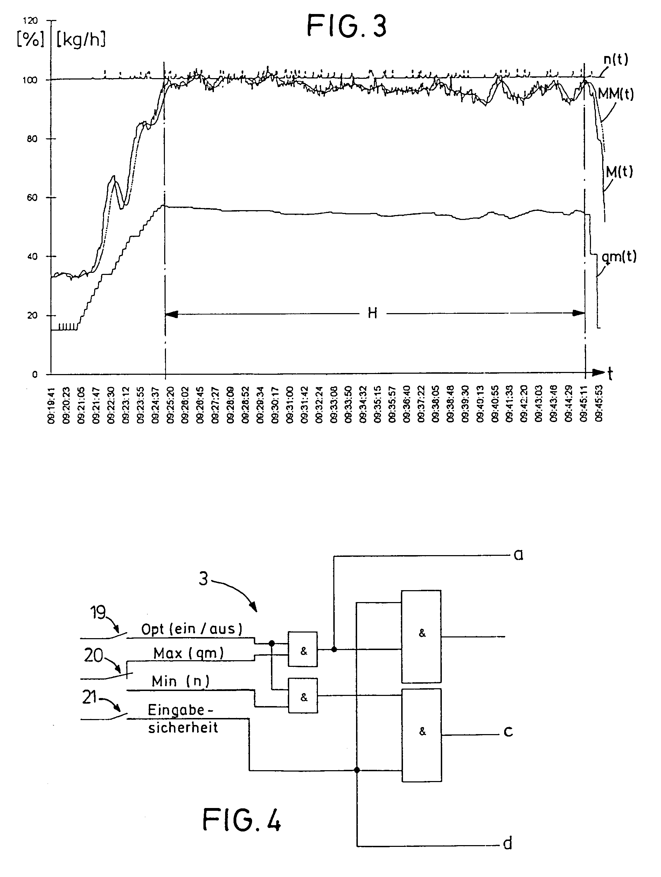

In den Fig. 2 und 3 ist nun die Arbeitsweise einer erfindungsgemäßen Steuerung bei einer Durchsatzoptimierung grafisch dargestellt. Zur übersichtlicheren Darstellung sind dabei im unteren Teil von Fig. 2 die zeitlichen Verläufe der Standardabweichung SAM des Mittelwertes MM des Drehmomentes sowie des Gradienten GMM des Drehmoment-Mittelwertes MM in Fig. 2 in logarithmischem Maßstab dargestellt. Die Ordinate im oberen Teil von Fig. 2 ist bezüglich der Drehmoments-Größen M und MM in %-Einheiten und bezüglich der Durchsatzgröße qm in kg/h-Einheiten normiert.

Folgende Randbedingungen wurden eingestellt:

Grenzwert des Drehmoment-Gradienten: 0,1%/sec.

Time-out: 10 sec.

Anzahl n der Meßwerte (Länge des Schieberegisters): 20

Fig. 2 zeigt den Anfahrvorgang in gegenüber Fig. 3 zeitlich gestreckter Darstellung. Fig. 3 zeigt den Anfahrvorgang des Extruders und den eigentlichen Extrusionsprozeß mit maximiertem Durchsatz über einen Zeitraum von ca. 25 Minuten.

Die Kurvenverläufe sind wie folgt zu interpretieren:

- Im Anfahrzustand (Fig. 2) beträgt der normierte Drehmoment-Mittelwert MM vor der Flanke A ca. 10%. Der Drehmomentgradient GMM ist sehr niedrig und liegt insbesondere unter der angegebenen Grenze von 0,1% pro Sekunde. Der Fuzzy-Steuerblock "Optimierungen" 4 entscheidet auf Durchsatzerhöhung von 25 kg/h auf 27 kg/h und der Durchsatz wird entsprechend erhöht (Flanke A).

- Nun läuft das Time-out ab, um die Reaktionszeit des Extruders auf die Durchsatzänderung und die Tot-Zeit der Zudosierungswaage abzuwarten.

- Nach Ablauf des Time-outs ist der aktuelle Wert des Drehmoment-Gradienten GMM kleiner als der Grenzwert von 0,1%/sec. Es wird daher eine weitere Durchsatzerhöhung um 2 kg/h zugelassen (Flanke B).

- Der Time-out läuft erneut ab. Der Drehmoment-Mittelwert MM steigt an und sein Gradient ist auch nach Ablauf des Time-outs größer als der zugelassene Grenzwert. Aufgrund der Entscheidungslogik wird der Durchsatz nicht weiter erhöht (Bereich C).

- Das Drehmoment steigt bis auf ca. 40% an und befindet sich dann wiederum im stationären Zustand (Bereich D). Entsprechend sinkt der Drehmoment-Gradient unter den Grenzwert und der Durchsatz wird wiederholt erhöht (Flanken E, F, G).

In dem dargestellten Beispiel waren Kopfdruck p2 und Rückstaulänge LR zu jeder Zeit in einem unkritischen Bereich.

Wie aus Fig. 3 deutlich wird, kann mit dieser Art von Steuerung der Durchsatz qm maximiert werden, da nach dem Anfahrvorgang im Zeitbereich H das Drehmoment M bzw. sein Mittelwert MM sehr nahe an der 100%-Grenze gehalten werden kann. So konnte ein hoher Durchsatz von ca. 50 bis 60 kg/h im Zeitraum H erreicht werden.

Neben der bereits erörterten Durchsatzmaximierung können mit Hilfe des erfindungsgemäßen Steuerungsverfahrens und seiner Realisierung durch die erläuterte Steuerung weitere Funktionen vorgesehen werden, nämlich die bereits angedeutete Drehzahlminimierung bei gegebenem Durchsatz, die Einzugsüberwachung und die Gewährleistung der Betriebssicherheit des Extruders bei manuellen Eingaben des Bedienungspersonals.

Diese verschiedenen Funktionen können durch den Aktivierungsblock 3 aktiviert werden, der die Schnittstelle zwischen den Optimierungsfunktionen und dem Bedienungspersonal darstellt.

Unter Bezugnahme auf Fig. 4 wird die Funktion des Aktivierungsblocks 3 näher erläutert. Über Eingabeschalter 19, 20, 21, die sinnbildlich zu verstehen sind und beispielsweise durch entsprechende Eingaben an einer Tastatur des Extruder-Steuerpults realisiert werden können, können folgende Einstellungen durch das Bedienungspersonal vorgenommen werden:

- Optimierung ein-/ausschalten (Opt (ein/aus))
- Auswahl des Optimierungskriteriums "Durchsatzmaximum" oder "Drehzahlminimum" (Max (qm) bzw. Min(n))
- "Eingabesicherheit" ein-/ausschalten

Durch die in Fig. 4 dargestellten logischen Und-Verknüpfungen "&" zwischen den eingangsseitig vornehmbaren Einstellungen werden logische Ausgangssignale a, b, c und d generiert, die an den Fuzzy-Steuerblock "Optimierungen" 4, den Komparator 7, die Entscheidungslogik 8 und die Stellsignalgenerierung 9 weitergegeben und dort verarbeitet werden. Ist zum Beispiel die Optimierungsfunktion inaktiviert, so bleiben die vorgenannten Steuerungseinheiten inaktiv und der Extruder wird nicht im Sinne einer Durchsatzmaximierung oder Drehzahlminimierung beeinflußt. Entsprechend kann bei aktivierter Optimierungsfunktion und Auswahl des Optimierungskriteriums "Drehzahlminimum" der Fuzzy-Steuerblock "Optimierungen" 4 in seinem internen Steuerungsablauf so umgestellt werden, daß eine Drehzahlminimierung stattfindet.

Dies wird im folgenden erläutert:

- Im Fuzzy-Klassifizierungsblock 4.1 werden der Drehmoment-Mittelwert MM und dessen Standardabweichung SAM wie oben bei der Durchsatzmaximierung klassifiziert und diese beiden Eingangsvariablen über einen auf Erfahrungswerten beruhenden Regelsatz mit einem Korrektur-Grobwert für die Drehzahländerung verknüpft.

Der Regelsatz ist in der folgenden Tabelle 2 dargestellt.

| | | Standardabweichung | | | | |
|---|---|---|---|---|---|---|
| | | sehr niedrig | niedrig | mittel | hoch | sehr hoch |
| Dreh-moment-mittelwert | niedrig | NB | NB | N | N | Z |
| | mittel | NB | NB | N | Z | P |
| | hoch | N | N | Z | P | P |
| | sehr hoch | Z | P | P | P | P |
| | zu hoch | P | P | P | P | P |

Tab. 2: Regelsatz für die Drehzahländerung bei der Drehzahlminimierung

Folgende Abkürzungen für die Korrektur-Grobwerte werden dabei verwendet:

NB (negative big): Änderung stark negativ (Drehzahl wird um 30/min reduziert)
N (negative): Änderung negativ (Drehzahl wird um 10/min reduziert)
Z (zero): Keine Änderung (Drehzahl bleibt unverändert)
P (positive): Änderung positiv (Drehzahl wird um 5/min erhöht)

Es ist anzumerken, daß insbesondere im kritischen Bereich bei relativ hohen Drehzahlmomentwerten und Schwankungsbreiten eine schnellere Erhöhung der Drehzahl zu einer Blockierung des Extruders führen würde.

Wenn also unter Bezugnahme auf Tabelle 2 der Drehmoment-Mittelwert MM sehr hoch und die Standardabweichung SAM ebenfalls sehr hoch sind, so wird als Korrektur-Grobwert "P" zugeordnet, d.h. die Drehzahl muß erhöht werden, da sich der Extruder in einem kritischen Zustand befindet, der durch Drehzahlerhöhung entschärft werden kann.

- Analog dem Regelsatz gemäß Tabelle 2 sind entsprechende Regelsätze für die Klassifizierung der Mittelwerte und Standardabweichungen des Kopfdruckes und der Rückstaulänge im Steuerprogramm implementiert, auf deren Basis der Block 4 entsprechende Korrektur-Grobwerte ausgibt. Die drei von den Fuzzy-Klassifizierungsblöcken 4.1, 4.2 und 4.3 ausgegebenen Korrektur-Grobwerte werden wiederum vom Komparator 7 verglichen und der kritischste zur Weitergabe an die Entscheidungslogik 8 selektiert. Kritisch ist hierbei grundsätzlich eine geforderte Drehzahlerhöhung.

- Die Entscheidungslogik 8, die ebenso wie der Komparator 7 und die Stellsignalgenerierung 9 mit dem Aktivierungsblock 3 verbunden und damit darüber informiert ist, daß der Extruder im vorliegenden Falle im Sinne einer Drehzahlminimierung angesteuert werden soll, entscheidet wiederum anhand des Drehmomentgradienten, ob der vom Komparator 7 gelieferte Korrektur-Grobwert an die Stellsignalgenerierung 9 weitergegeben wird. Falls ja, d.h. der Extruder befindet sich in einem stationären Zustand, wird die Drehzahländerung zugelassen und über die Stellsignalgenerierung 9 ein entsprechendes Steuersignal delta n an die Motorsteuerung 22 des Extrudermotors 23 abgegeben.

Im folgenden wird nun die Funktion "Eingabesicherheit" bei einer vom Bedienungspersonal manuell eingegebenen Drehzahl-, Durchsatz- oder Gehäusetemperaturänderung erläutert:

Grundsätzlich werden solche Änderungen über die Eingabeeinheit 16 manuell eingegeben. Diese eingegebene Änderung wird dem Fuzzy-Steuerblock "Eingabesicherheit" 5 zugeführt, der als variable Eingangsgrößen auch die drei Ausgangssignale der Fuzzy-Klassifizierungsblöcke 4.1, 4.2 und 4.3 erhält.

Der Fuzzy-Steuerblock "Eingabesicherheit" 5 läßt nun grundsätzlich Änderungen der Drehzahl oder des Durchsatzes durch das Bedienungspersonal nur dann zu, wenn die zugehörige Optimierungsfunktion "Drehzahlminimierung" bzw. "Durchsatzmaximierung" inaktiv ist. Hierüber ist der Block 5 durch seine in Fig. 1 dargestellte Verbindung zum Aktivierungsblock 3 "informiert".

Eine vom Bedienungspersonal initiierte Drehzahl-, Durchsatz- oder Gehäusetemperaturänderung wird nun wie folgt verarbeitet.

- Drehzahländerung

Zunächst wird im Block 5 die Differenz zwischen dem vorherigen und dem eingegebenen, neuen Sollwert gebildet. Es wird also eine Grob-Klassifizierung der Drehzahl-Sollwertänderung in "negativ" bzw. "positiv" im Block 5 vorgenommen. Das Ergebnis wird zusammen mit den Korrektur-Grobwerten an den Ausgängen der Fuzzy-Klassifizierungsblöcke 4.1, 4.2 und 4.3 in einem weiteren Fuzzy-Block 24 innerhalb des Fuzzy-Steuerblocks "Eingabesicherheit" 5 verarbeitet. Als Basis hierfür dient der in Tabelle 3 dargestellte Regelsatz für eingabesichere Drehzahländerungen, der die Eingangsvariable "Durchsatzänderung" nämlich den Korrektur-Grobwert vom Block 4 und die manuell eingegebene Drehzahl-Sollwertänderung mit einem zulässigen Gradienten für die Drehzähländerung verknüpft. Der in Tabelle 3 dargestellte Regelsatz ist wiederum matrizenartig und basiert auf Erfahrungswerten.

| | | Durchsatzänderung | | | | |
|---|---|---|---|---|---|---|
| | | Positiv big | Positiv | Null | negativ | negativ big |
| Drehzahl-sollwert-änderung | negativ | NB | N | Z | Z | Z |
| | positiv | PB | PB | P | P | P |

Tab. 3: Regelsatz für eingabesichere Drehzahländerungen

Die Abkürzungen NB, N, Z, und P entsprechen den weiter oben bei der Optimierungsfunktion "Drehzahlminimierung" angegebenen Werten für die Drehzahländerung, die über die Entscheidungslogik 8 und die Stellsignalgenerierung 9 zur entsprechenden Ansteuerung des Extruders 1 herangezogen werden. "PB" bedeutet analog "positive big" mit einer Drehzahlerhöhung von 30/min.

Wenn nun z.B. das Bedienungspersonal eine Drehzahlerniedrigung fordert (d.h. "Drehzahl-Sollwertänderung negativ" und die Durchsatzänderung aus dem Fuzzy-Steuerblock 4 "negativ" lautet, so wird als zugehöriger zulässiger Drehzahlgradient "Z" ermittelt, d.h. daß eine Drehzahlabsenkung von der Steuerung nicht erlaubt wird, da sich der Extruder offensichtlich in einem kritischen Zustand befindet.

- Durchsatzänderung

Durchsatz-Sollwertänderungen, die über die Eingabeeinheit 16 vom Bedienungspersonal eingegeben werden, werden in analoger Weise wie eingegebene Drehzahländerungen verarbeitet und über den in Tabelle 4 angegebenen Regelsatz mit den aus dem Fuzzy-Steuerblock "Optimierungen" 4 ermittelten Durchsatzänderungen verknüpft, um einen Durchsatzgradienten zu generieren. Dieser wird in eine Durchsatzänderung umgerechnet und der Durchsatz wird sukzessive an den neuen Sollwert herangefahren, ohne den Betrieb des Extruders zu gefährden.

Durchsatzänderung

| Durchsatz-<br>sollwert-<br>änderung | | Positiv big | Positiv | Null | negativ | negativ big |
|---|---|---|---|---|---|---|
| | negativ | NB | NB | NB | NB | NB |
| | | | | | | |
| | Positiv | PB | P | Z | Z | Z |

Tab. 4: Regelsatz für eingabesichere Durchsatzänderungen

In der Tabelle bedeuten

| | |
|---|---|
| NB (negative big): | Unmittelbare Übernahme des neuen Sollwerts |
| Z (zero): | Keine Durchsatzänderung |
| P (positive): | Positiver Durchsatzgradient (Durchsatz wird erhöht) |
| PB (positive big): | Durchsatzgradient stark positiv (Durchsatz wird stark erhöht) |

Als Beispiel wird aufgeführt, daß bei einer vom Bedienungspersonal gewünschten Durchsatzerhöhung (Durchsatz-Sollwertänderung positiv) einerseits und einer vom Fuzzy-Steuerblock "Optimierungen" 4 ermittelten Korrektur-Grobwert "negativ" der Gradient der Durchsatzänderung Gqm zu "Z" ermittelt wird, d.h. es wird keine Durchsatzänderung zugelassen.

- Gehäusetemperaturänderungen
Gehäusetemperaturänderungen in allen Zonen außer den Plastifizierzonen des Extruders sind ohne Überwachung zulässig.
Eine Erhöhung der Gehäusetemperatur T in den Plastifizierzonen selbst ist ebenfalls zulässig. Kühlen in den Plastifizierzonen mit Wasser kann zu einem schnellen Anstieg des Drehmoments und einer Störung des Extruderbetriebes führen.
Wird nun eine Gehäusetemperaturänderung vom Bedienungspersonal über die Eingabeeinheit 16 eingegeben, wird diese wie folgt verarbeitet:
Zunächst wird wieder die Differenz zwischen dem vorherigen und dem neuen, eingegebenen Sollwert gebildet, es wird also die Gehäusetemperatur-Sollwertänderung grob in "negativ" bzw. "positiv" klassifiziert. Das Ergebnis wird zusammen mit den Korrektur-Grobwerten aus dem Fuzzy-Steuerblock "Optimierungen" 4 in den weiteren Fuzzy-Block 24 verarbeitet, wozu der in Tabelle 5 dargestellte Regelsatz dient. Dieser verknüpft die beiden Eingangsvariablen "Durchsatzänderung" und die "Gehäusetemperatur-Sollwertänderung" mit einem Gradienten für die Gehäusetemperaturänderung. Dieser wird in eine Gehäusetemperaturänderung umgerechnet und die Gehäusetemperatur in der Plastifizierzone wird sukzessive an den neuen Sollwert herangefahren, ohne den Betrieb des Extruders zu gefährden. Eine Gehäusetemperaturerhöhung in den Plastifizierzonen wird sofort übernommen und der neue Sollwert angepaßt, da eine Temperaturerhöhung unkritisch ist.

Durchsatzänderung

| Gehäuse-<br>temperatur-<br>sollwert-<br>änderung | | Positiv big | Positiv | Null | negativ | negativ big |
|---|---|---|---|---|---|---|
| | negativ | NB | N | Z | Z | Z |
| | | | | | | |
| | positiv | PB | PB | PB | PB | PB |

Tab. 5: Regelsatz für eingabesichere Gehäusetemperaturänderungen in
den Plastifizierzonen des Extruders

Die Abkürzungen für den Temperaturgradienten in Tabelle 5 haben folgende Bedeutung:

NB (negative big)    Temperaturgradient stark negativ (Temperatur wird stark reduziert)
N (negative)    Temperaturgradient negativ (Temperatur wird reduziert)
Z (zero)    Keine Änderung
PB (positive big)    Temperaturgradient stark positiv (Temperatur wird stark erhöht).

Soll nun z.B. die Gehäusetemperatur abgesenkt werden (Gehäusetemperatur-Sollwertanderung negativ) und vom Fuzzy-Block 4 wird eine Durchsatzänderung delta qm mit dem Korrektur-Grobwert "positiv big" eingegeben, so wird der Temperatur-Gradient zu "NB" bestimmt, d.h. die Temperatur kann schnell reduziert werden.

Wie aus Fig. 1 deutlich wird, ist der Fuzzy-Steuerblock "Eingabesicherheit" 5 ausgangsseitig mit der Entscheidungslogik 8 verbunden, die die Ausgangswerte des Blockes 5 verarbeitet und zur Stellsignalgenerierung 9 weitergibt, um so den Extruder entsprechend den Eingaben des Betriebspersonals - sofern diese von der Steuerlogik als zulässig erkannt werden - anzusteuern.

Abschließend wird die Einzugsüberwachung wie folgt beschrieben:

- Funktion der Einzugsüberwachung 6 ist es zu verhindern, daß sich Material im Einzugstrichter 18 des Extruders anhäuft. Dies ist beim Erreichen der sogenannten Einzugsgrenze des Extruders der Fall, wobei dann das Drehmoment nicht weiter ansteigt.

- Um eine Materialanhäufung im Trichter zu überwachen, wird ein Sensor 25 im Einzugstrichter 18 plaziert, der bei einer Materialanhäufung ein entsprechend digitales Signal ausgibt. Dies wird von der Einzugsüberwachung 6 erkannt und es wird ein entsprechendes Ausgangssignal an den Fuzzy-Steuerblock "Optimierungen" 4, den Fuzzy-Steuerblock "Eingabesicherheit" 5 und die Entscheidungslogik 8 abgegeben. In diesem Falle werden die oben beschriebenen Zugehörigkeitsfunktionen der Fuzzy-Optimierungslogik angepaßt und die Korrektur-Grobwerte um einen Prozentsatz von ca. 10% gesenkt (bei Durchsatzoptimierung) bzw. erhöht (bei Drehzahlminimierung). Die neuen Korrekturgrobwerte werden automatisch in die Regelung übernommen. Ist dann der Trichter nach Ablauf einer einstellbaren Zeit noch nicht frei geworden, erfolgt eine erneute Anpassung der Regelsätze und der durch sie ermittelten Korrektur-Grobwerte, was wiederum zu einer Reduzierung des Durchsatzes oder einer Erhöhung der Drehzahl führt.

Grundsätzlich können auf die vorgenannte Weise alle kritischen Öffnungen, wie Entlüftungs- und Entgasungsdome am Extruder überwacht werden.

Zur Stellsignalgenerierung 9 ist grundsätzlich zu ergänzen, daß die Generierung des Stellsignals der folgenden Vorschrift gehorcht:

$$S_{Neu} = S_{Alt} + delta\ S_{Fuzzy}$$

$S_{Neu}$:    Sollwert im aktuellen Steuerzyklus

$S_{Alt}$:    Sollwert im vorhergehenden Steuerzyklus

delta $S_{Fuzzy}$:    Ausgangssignal des Komparators 7

Zum "alten Sollwert" $S_{Alt}$ wird also ein Wert addiert, der vom Komparatorblock 7 ausgegeben wird. Mit dem "neuen Sollwert" wird die Steuerung des Extruders 1 beaufschlagt und dieser entsprechend angesteuert.

**Patentansprüche**

1. Steuerungsverfahren für Extrudiermaschinen zur automatischen Optimierung von einem Betriebsparameter (qm, n) auf der Basis einer Fuzzy-Logik-Steuerung (FLS), insbesondere zur Maximierung des Materialdurchsatzes (qm) oder zur Minimierung der Schneckenwellen-Drehzahl (n), mit folgenden Merkmalen:

- mindestens eine für den Extruderbetrieb kritische Meßgröße (M, p2, LR) wird als Ist-Wert erfaßt,
- der Ist-Wert wird mit einem vorgegebenen Soll-Wert verglichen und anhand einer Klassifizierungsvorschrift grob klassifiziert,
- auf der Basis der Grobklassifizierung wird ein anhand von Erfahrungswerten definierter Korrektur-Grobwert (NB, N, Z, P, PB) für diesen Betriebsparameter (qm, n) ermittelt,

- aus dem Korrekturgrobwert (NB, N, Z, P, PB) wird ein Stellsignal ($S_{Neu}$) zur maschinenseitigen Änderung dieses Betriebsparameters (qm, n) generiert und
- nach einer Wartezeit wird der vorstehende Steuerungsvorgang zyklisch wiederholt.

2. Steuerungsverfahren nach Anspruch 1, <u>dadurch gekennzeichnet, daß</u> zur Optimierung des Betriebsparameters (qm, n,) parallel mehrere Größen (M, p2, LR) als Ist-Werte erfaßt, jeweils grob klassifiziert sowie daraus Korrektur-Grobwerte (NB, N, Z, P, PB) für diesen Betriebsparameter (qm, n) ermittelt werden und daß aus diesen Korrektur-Grobwerten (NB, N, Z, P, PB) der kritischste Grobwert (NB, N, Z, P, PB) ermittelt und daraus ein Stellsignal ($S_{Neu}$) zur maschinenseitigen Änderung dieses Betriebsparameters (qm, n) generiert wird.

3. Steuerungsverfahren nach Anspruch 1 oder 2, <u>dadurch gekennzeichnet, daß</u> jeweils ein über mehrere aufeinanderfolgende Meßzyklen bestimmter Mittelwert (MM, Mp2, MLR) der jeweiligen Meßgröße (M, p2, LR) als Ist-Wert zur Grobklassifizierung herangezogen wird.

4. Steuerungsverfahren nach Anspruch 3, <u>dadurch gekennzeichnet, daß</u> die Standardabweichung (SAM, SAp2, SALR) des Mittelwertes (MM, Mp2, MLR) erfaßt sowie anhand einer Klassifizierungsvorschrift grob Klassifiziert wird, und daß über einen matrizenartigen, anhand von Erfahrungswerten definierten Regelsatz, der die grob Klassifizierten Mittelwerte (MM, Mp2, MLR) mit den grob Klassifizierten Standardabweichungen (SAM, SAp2, SARL) verknüpft, ein Korrektur-Grobwert (NB, N, Z, P, PB) für den Betriebsparameter (qm, n) ermittelt wird.

5. Steuerungsverfahren nach Anspruch 3 oder 4, <u>dadurch gekennzeichnet, daß</u> der Gradient (GMM) des Mittelwertes (MM) mindestens einer Meßgröße (M) ermittelt wird und daß bei Überschreiten eines definierten Maximalwertes des Gradienten (GMM) keine Änderung des zu optimierenden Betriebsparameters (qm, n) stattfindet.

6. Steuerungsverfahren nach einem der Ansprüche 1 bis 5, <u>dadurch gekennzeichnet, daß</u> als für den Extruderbetrieb kritische Meßgrößen das Drehmoment (M) der mindestens einen Extruder-Schnecke, der Kopfdruck (p2) des Extruders (1) und/oder die Rückstaulänge (LR) des Extrudiermaterials im Extruder (1) herangezogen werden.

7. Steuerungsverfahren nach einem der Ansprüche 1 bis 6, <u>dadurch gekennzeichnet, daß</u> ein manuell eingegebener Änderungswert des Betriebsparameters (qm, n, T) erfaßt sowie grob klassifiziert wird, daß der so klassifizierte Änderungswert über einen matrizenartigen, anhand von Erfahrungswerten definierten Regelsatz mit den für die automatische Optimierung ermittelten Korrektur-Grobwerten (NB, N, Z, P, PB) für eine Betriebsgröße (qm) verknüpft wird, und daß aus diesem Regelsatz ein zulässiger Korrektur-Grobwert (Delta qm, Delta n, Delta T) für diesen Betriebsparameter (qm, n, T) ermittelt wird.

8. Steuerungsverfahren nach Anspruch 7, <u>dadurch gekennzeichnet, daß</u> als manuell änderbare Betriebsparameter die Drehzahl (n) der mindestens einen Extruder-Schneckenwelle, der Materialdurchsatz (qm) durch den Extruder (1) und/oder die Gehäusetemperatur (T) in der Plastifizierzone des Extruders (1) herangezogen werden.

9. Steuerungsverfahren nach einem der Ansprüche 1 bis 8, <u>dadurch gekennzeichnet, daß</u> der Materialeintrag in dem Extruder (1) überwacht und bei Erreichen der Einzugsgrenze des Extruders (1) der ermittelte Korrektur-Grobwert (NB, N, Z, P, PB) für die Betriebsgröße (qm, n) derart modifiziert wird, daß die Einzugsgrenze nicht mehr erreicht wird.

## Claims

1. Control method for extruders for the automatic optimization of an operating characteristic (qm, n) on the basis of a fuzzy logic control, in particular for the maximization of the material throughput (qm) or for the minimization of the screw shaft speed (n), comprising the following features:

   - at least one measured value (M, p2, LR) critical for the extruder operation is detected as an actual value,
   - the actual value is compared with a given nominal value and roughly classified, based on a classification regulation,
   - on the basis of the rough classification, a rough correction value (NB, N, Z, P, PB) which is defined by means of empirical values is determined for this operating characteristic (qm, n),
   - based on the rough correction value (NB, N, Z, P, PB), a control signal ($S_{new}$) is generated for the change, on the side of the machine, of this operating characteristic (qm, n), and
   - after a waiting time the above control process is repeated cyclically.

2.  Control method according to claim 1, <u>characterized in that</u> for the optimization of the operating characteristic (qm, n), several variables (M, p2, LR) are detected in parallel as actual values, they are roughly classified, and rough correction factors (NB, N, Z, P, PB) are determined therefrom for this operating characteristic (qm, n), and in that based on these rough correction values (NB, N, Z, P, PB), the most critical rough value (NB, N, Z, P, PB) is determined and a control signal ($S_{new}$) is generated therefrom for the change, on the side of the machine, of this operating factor (qm, n).

3.  Control method according to claim 1 or 2, <u>characterized in that</u> a mean value (MM, Mp2, MLR), determined during several successive measuring cycles, of the respective measured variable (M, p2, LR) is used as an actual value for the rough classification.

4.  Control method according to claim 3, <u>characterized in that</u> the standard deviation (SAM, Sap2, SALR) of the mean value (MM, Mp2, MLR) is detected and roughly classified by means of a classification regulation, and in that a rough correction value (NB, N, Z, P, PB) for the operating characteristic (qm, n) is determined by way of a matrix-type control record, which is defined on the basis of empirical values and which combines the roughly classified mean values (MM, Mp2, MLR) with the roughly classified standard deviations (SAM, Sap2, SARL).

5.  Control method according to claim 3 or 4, <u>characterized in that</u> the gradient (GMM) of the mean value (MM) of at least one measured variable (M) is determined and in that, when a defined maximum value of the gradient (GMM) is exceeded, no change of the operating characteristic to be optimized takes place.

6.  Control method according to one of claims 1 to 5, <u>characterized in that</u> the torque (M) of the at least one extruder screw, the head pressure (p2) of the extruder (1) and/or the accumulation length (LR) of the extrusion material in the extruder (1) are used as measured variables critical for extruder operation.

7.  Control method according to one of claims 1 to 6, <u>characterized in that</u> a manually entered change value of the operating characteristic (qm, n, T) is detected and roughly classified, in that by way of a matrix-type control record defined by empirical values, the change value thus classified is combined with the rough correction values (NB, N, Z, P, PB) for an operating characteristic (qm), which have been determined for the automatic optimization, and in that from this control record, a reliable rough correction value (Delta qm, Delat n, Delta T) is determined for this operating characteristic (qm, n, T).

8.  Control method according to claim 7, <u>characterized in that</u> the speed (n) of the at least one extruder screw shaft, the material throughput (qm) through the extruder (1) and/or the housing temperature (T) in the melting zone of the extruder (1) are used as manually modifiable operating characteristics.

9.  Control method according to one of claims 1 to 8, <u>characterized in that</u> the material throughput in the extruder (1) is monitored, and in that when the feed limit of the extruder (1) is reached, the determined rough correction value (NB, N, Z, P, PB) for the operating characteristic (qm, n) is modified in such a way that the feed limit is not reached any longer.

**Revendications**

1.  Procédé de commande pour machines à extruder, en vue de l'optimisation automatique d'un paramètre de fonctionnement (qm, n) sur la base d'une commande par logique floue (FLS), en particulier pour la maximisation du débit de matière (qm) ou pour la minimisation de la vitesse angulaire (n) des arbres de vis sans fin, présentant les caractéristiques suivantes :

    -   au moins une grandeur de mesure (M, p2, LR), critique pour le mode extrusion, est saisie en tant que valeur réelle,
    -   la valeur réelle est comparée à une valeur de consigne préétablie, puis classifiée grossièrement à l'appui d'une directive de classification,
    -   sur la base de la classification grossière, une valeur grossière de correction (NB, N, Z, P, PB), définie à l'appui de valeurs empiriques, est établie pour ce paramètre de fonctionnement (qm, n),
    -   un signal de réglage ($S_{Neu}$) est engendré à partir de la valeur grossière de correction (NB, N, Z, P, PB), en vue de la modification de ce paramètre de fonctionnement (qm, n) par la machine, et
    -   après un temps d'attente, le processus de commande précité est répété cycliquement.

**2.** Procédé de commande selon la revendication 1, caractérisé par le fait que, pour l'optimisation du paramètre de fonctionnement (qm, n), plusieurs grandeurs (M, p2, LR) sont saisies parallèlement en tant que valeurs réelles et font respectivement l'objet d'une classification grossière, et des valeurs grossières (NB, N, Z, P, PB) de correction de ce paramètre de fonctionnement (qm, n) sont établies à partir desdites grandeurs ; et par le fait que la valeur grossière la plus critique (NB, N, Z, P, PS) est établie à partir de ces valeurs grossières de correction (NB, N, Z, P, PS), valeur à partir de laquelle un signal de réglage (S$_{Neu}$) est engendré en vue de la modification de ce paramètre de fonctionnement (qm, n) par la machine.

**3.** Procédé de commande selon la revendication 1 ou 2, caractérisé par le fait qu'une valeur moyenne respective (MM, Mp2, MLR), déterminée par l'intermédiaire de plusieurs cycles de mesure successifs, est rapprochée de la grandeur de mesure considérée (M, p2, LR) en tant que valeur réelle, en vue de la classification grossière.

**4.** Procédé de commande selon la revendication 3, caractérisé par le fait que l'écart standard (SAM, SAp2, SALR) de la valeur moyenne (MM, Mp2, MLR) est Saisi, puis fait l'objet d'une classification grossière à l'appui d'une directive de classification ; et par le fait qu'une valeur grossière de correction (NB, N, Z, P, PB) est établie, pour le paramètre de fonctionnement (qm, n), par l'intermédiaire d'un groupe régulateur du type matrice qui est défini à l'appui de valeurs empiriques et combine les valeurs moyennes (MM, Mp2, MLR), classifiées grossièrement, avec les écarts standard (SAM, SAp2, SARL) classifiés grossièrement.

**5.** Procédé de commande selon la revendication 3 ou 4, caractérisé par le fait que le gradient (GMM) de la valeur moyenne (MM) d'au moins une grandeur de mesure (M) est établi ; et par le fait qu'aucune modification du paramètre de fonctionnement (qm, n), devant être optimisé, n'a lieu en cas de dépassement d'une valeur maximale définie dudit gradient (GMM).

**6.** Procédé de commande selon l'une des revendications 1 à 5, caractérisé par le fait que le couple de rotation (M) de la vis sans fin d'extrusion prévue au minimum, la pression de tête (p2) de l'extrudeuse (1) et/ou la longueur de retenue (LR) de la matière extrudée, dans ladite extrudeuse (1), sont employés en tant que grandeurs de mesure critiques pour le mode extrusion.

**7.** Procédé de commande selon l'une des revendications 1 à 6, caractérisé par le fait qu'une valeur de modification du paramètre de fonctionnement (qm, n, T), entrée manuellement, est saisie et fait l'objet d'une classification grossière ; par le fait que la valeur de modification ainsi classifiée est combinée, par l'intermédiaire d'un groupe régulateur du type matrice défini à l'appui de valeurs empiriques, avec les valeurs grossières de correction (NB, N, Z, P, PB) affectées à une grandeur de fonctionnement (qm) et établies pour l'optimisation automatique ; et par le fait qu'une valeur grossière de correction admissible (delta qm, delta n, delta T), affectée à ce paramètre de fonctionnement (qm, n, T), est établie à partir dudit groupe régulateur.

**8.** Procédé de commande selon la revendication 7, caractérisé par le fait que la vitesse angulaire (n) de l'arbre de vis sans fin d'extrusion prévu au minimum, le débit de matière (qm) parcourant l'extrudeuse (1) et/ou la température (T) du carter, dans la zone de plastification de ladite extrudeuse (1), sont employés en tant que paramètres de fonctionnement modifiables manuellement.

**9.** Procédé de commande selon l'une des revendications 1 à 8, caractérisé par le fait que le déversement de matière est surveillé dans l'extrudeuse (1) et, lorsque la limite d'alimentation de ladite extrudeuse (1) est atteinte, la valeur grossière de correction établie (NB, N, Z, P, PB), affectée à la grandeur de fonctionnement (qm, n), est modifiée de telle sorte que la limite d'alimentation ne soit plus atteinte.

FIG.1

FIG. 2

FIG. 3

FIG. 4